# EUROPEAN PATENT SPECIFICATION

(11) **EP 1 013 121 B1**
(45) Date of publication and mention of the grant of the patent: **27.07.2005**
(21) Application number: 98900091.4
(22) Date of filing: 05.01.1998
(51) Int. Cl.: H04Q 7/36

(54) **METHOD FOR DETERMINING RADIO NETWORK HOT SPOT AREA LOCATION, AND TRANSCEIVER**
VERFAHREN ZUR BESTIMMUNG DER GEBIETE MIT HOHEN VERKEHR UND SENDEMPFÄNGER
PROCEDE SERVANT A DETERMINER L'EMPLACEMENT DE LA ZONE DE POINTS DE CONCENTRATION D'UN RESEAU RADIO ET EMETTEUR-RECEPTEUR

(30) Priority: 03.01.1997 FI 970033
(43) Date of publication of application: 28.06.2000
(73) Proprietor: Nokia Corporation, 02150 Espoo (FI)
(72) Inventor: PELTOLA, Harri, FIN-02920 Espoo (FI)
(74) Representative: Antila, Harri Jukka Tapani
(86) International application number: PCT/FI1998/000012
(87) International publication number: WO 1998/030033

(56) References cited:
- EP-A- 0 710 043
- WO-A-94/05098
- WO-A-94/06222
- WO-A-96/35305

## Description

### FIELD OF THE INVENTION

The invention relates to a method for determining radio network hot spot area location, the radio network comprising at least one base station and a plurality of subscriber terminals, the hot spot area having a concentration of subscriber terminals, in which method the base stations form location areas and transmit location code on the basis of which the subscriber terminals are signalling with the base station and identify the base stations belonging to the same location area.

The invention also relates to a transceiver used in a radio network for determining hot spot area location, the radio network comprising at least one base station and a plurality of subscriber terminals, the hot spot area having a concentration of subscriber terminals, and the base stations forming local areas and transmitting location code on the basis of which the subscriber terminals identify the base stations belonging to the local area and are signalling with the base station.

### BACKGROUND OF THE INVENTION

It is previously known to define a concentration of subscriber terminals, or hot spot areas, of a radio network, the GSM (Global System for Mobile communication) and the DCS (Digital Cellular System) radio networks in particular. The hot spot areas comprise a plurality of subscriber terminals compared with the available radio network capacity in the same area. In the hot spot areas the radio network is overloaded or it is more likely to become overloaded than any other part of the radio network. Overload could have been detected for example by using a radio network management computer. Overload can be avoided if a base station is built in the radio network hot spot area and a new cell is formed, for example a microcell. In this way additional capacity is obtained to the radio network. There can be several hot spot areas in the radio network area.

It has previously been known to define the hot spot areas using a receiver located in the radio network area. The receiver has measured the signal strength of subscriber terminals, for example that of mobile phones, located in the radio network area. The number of subscriber terminals has been determined based on the signal strength. The distance between the subscriber terminal and the base station has further been determined from the signal strength, the distance having been utilized in the definition of the hot spot area.

EP 0710043 teaches a method of monitoring a cellular mobile radio system to derive location area information. The cellular mobile radio system comprises a fixed part providing radio coverage in a plurality of cells logically grouped in location areas and mobile stations for communicating with the fixed part of the system to enable the fixed part to keep track of the mobile stations.

However, there have been certain drawbacks in the prior art method. Power control, which is meant for saving the battery in the subscriber terminal, is used in the subscriber terminals. The subscriber terminal power control affects the strength of the transmitted signal. If power control has been used in the subscriber terminals of the radio network and the hot spot area of the radio network has simultaneously been defined, then the exact definition of the hot spot area location has not been successful. Moreover, the precise number of the subscriber terminals located in the hot spot area has not been established by using the method. What has been described above has resulted in that e.g. the microcell formed on the basis of the prior art method has arrived at an incorrect position.

### SUMMARY OF THE INVENTION

An object of the present invention is to implement a method for defining precisely a radio network hot spot area and particularly a hot spot area location.

This is achieved with the method set forth in the preamble characterized in that a location code not belonging to the location area is transmitted by the transceiver to the subscriber terminals, subscriber terminals start signalling with the transceiver when receiving the location code, the number of signalling subscriber terminals is calculated on the basis of said location code and a direct distance that the location code has travelled to the subscriber terminal is calculated by the transceiver using signalling.

The transceiver of the invention is characterized in that the transceiver comprises transmission means for transmitting location code not belonging to the local area to the subscriber terminals, the transmission means for signalling with the subscriber terminals which transmission means are adapted to start signalling with the subscriber terminals when the subscriber terminals receive said location code, calculation means for calculating the number of signalling subscriber terminals based on the transmitted location code and the calculation means for calculating a distance between the transceiver and the subscriber terminals signalling with the transceiver using the signalling.

The method of the invention has several advantages. Location code not belonging to the location area is transmitted in the radio network, and based on the signalling code the number of signalling subscriber terminals is calculated using signalling. Location code is preferably transmitted from various locations of the radio network, whereby a distribution of the subscriber terminals can be determined. The precise location of the hot spot area is defined on the basis of the substantially direct distance that the location code has travelled to the subscriber terminal. The location of the hot spot area is thus precisely defined using the method, whereby for example a new base station can be located in one go to a preferable terrain.

The preferred embodiments of the method of the invention are also disclosed in the enclosed dependent claims and the preferred embodiments of the transceiver of the invention are disclosed in the enclosed dependent claims.

### BRIEF DESCRIPTION OF THE DRAWINGS

In the following the invention will be described in greater detail with reference to examples in the accompanying drawings, in which
Figure 1 shows a radio network in which a transceiver of the invention is used and
Figure 2 shows the transceiver of the invention.

### DETAILED DESCRIPTION OF THE PREFERRED EMBODIMENTS

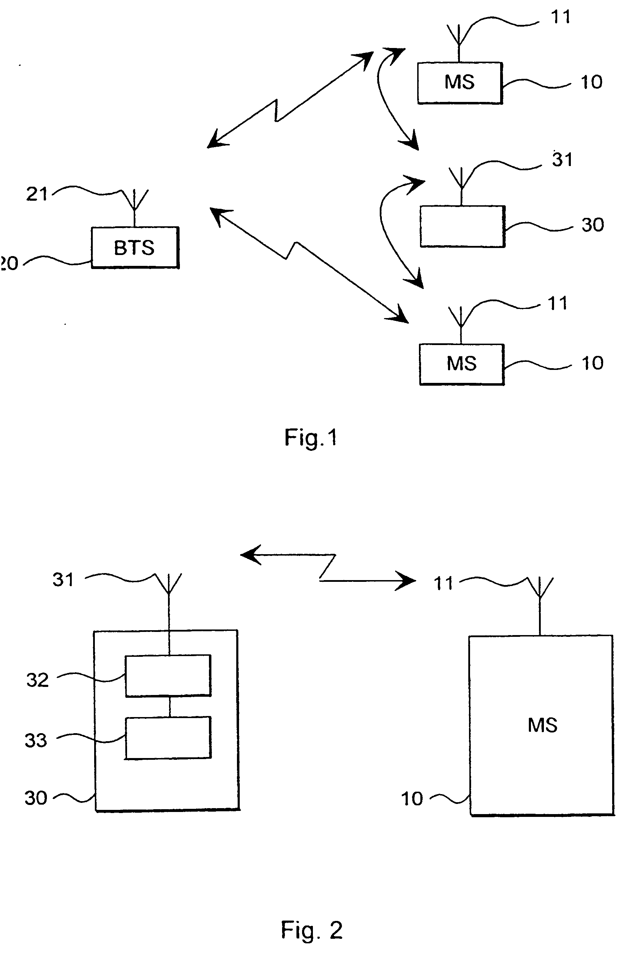

Figure 1 shows a radio network comprising plural subscriber terminals 10, base station 20 and transceiver 30. The radio network is for example a GSM or a DCS network or an equivalent network. Subscriber terminals 10 communicate with base station 20 if necessary. Subscriber terminals in the radio network of the Figure belong to the coverage area of base station 20. The coverage area of base station 20 forms a location area to subscriber terminals 10 located in the area. When subscriber terminal 10 moves outside the location area, then subscriber terminal 10 updates location information on the basis of which subscriber terminal 10 knows its location. Base station 20 updates information from subscriber terminals 10 located within its coverage area. If subscriber terminal 10 does not leave the coverage area, then the location information of subscriber terminal 10 do not have to be updated. There may be several base stations 20 in the radio network area handling the traffic of the same location area.

Base station 20 comprises antenna 21 using which the base station transmits particular code on the basis of which subscriber terminals 10 located within the coverage area of base station 20 identify their location. In the example of the Figure LAC code (Location Area Code) is used for identifying the location. Different location areas have their own LAC codes. When subscriber terminal 10 updates location information, then subscriber terminal 10 simultaneously signals with base station 20. Generally the radio network is divided into cells which each one forms its own coverage area.

If there are in the area of base station 20 of the example constantly plural subscriber terminals 10 attempting to establish connections compared with the available capacity of base station 20, then base station 20 eventually becomes overloaded. When overloading occurs a large number of subscriber terminals 10 cannot establish a connection fast enough, for example with another subscriber terminal 10. Consequently, a hot spot area has been formed substantially in the area of base station 20. If a new base station 20 or, for example a microcell, is built in the hot spot area, then the overloading of base station 20 is prevented. However, the coverage area of base station 20 can be extensive in which case it becomes difficult to establish the hot spot area location.

Figure 2 shows transceiver 30 of the invention. Transceiver 30 comprises transmission means 32 and calculation means 33. Transmission means 32 transmit code indicating location, for example LAC code, to subscriber terminals 10. Calculation means 33 calculate the number of subscriber terminals 10 from the signal transmitted by subscriber terminals 10. In addition, transceiver 30 comprises antenna 31 using which transceiver 30 transmits for example LAC code to the radio path and receives signal transmitted by subscriber terminal 10. In practice transceiver 30 is e.g. a movable test base station.

Transceiver 30 described in the solution of Figure 1 is used for determining the radio network hot spot area. Within the coverage area of base station 20 transceiver 30 is preferably located in the presumed hot spot area or near by. Transmission means 32 of transceiver 30 transmit signalling and LAC code within the coverage area of base station 20. Subscriber terminals 10 receive the signalling and the LAC code transmitted by transmission means 32, subscriber terminals 10 then having a chance to update their location information based on the received LAC code. Subscriber terminals 10 can update location information as transmission means 32 transmit different LAC code compared with the LAC code transmitted by base station 20.

When subscriber terminals 10 receive the LAC code of transceiver 30, then subscriber terminals 10 and transceiver 30 are signalling. Calculation means 33 of transceiver 30 calculate the number of subscriber terminals 10 that have tried to update the location position from the signalling between transceiver 30 and subscriber terminal 10. Calculation means 33 calculate the number of subscriber terminals 10 being on standby within the coverage area of subscriber terminals 10. Subscriber terminals 10 on standby are not in speech connection with another subscriber terminal 10. Calculation means 33 also calculate from the signalling a timing advance value on the basis of which calculation means 33 calculate the distance between transceiver 30 and subscriber terminal 10. When transceiver 30 transmits location code from various locations of the radio network, it is easy to define the precise location of the hot spot area based on the obtained distance results.

The location information update of subscriber terminals 10 is ended by transmitting a location update reject. If the definition of a hot spot area described above is performed in various locations of the radio network, then the distribution of subscriber terminals 10 in said area can be calculated from the measuring results. If the distribution of subscriber terminals 10 in some area is substantially larger than the capacity of base station 10 located in the area, then the area probably is a hot spot area. A hot spot area is at least formed when a large number of subscriber terminals 10 located in the area establish connection. Base station 20 has not enough capacity in said situation to simultaneously serve all subscriber terminals 10 located in the area.

Even though the invention has been described above with reference to the example of the accompanying drawings, it is obvious that the invention is not restricted to it but can be modified in various ways within the scope of the inventive idea disclosed in the attached claims.

## Claims

1. A method for determining radio network hot spot area location, the radio network comprising at least one base station (20) and a plurality of subscriber terminals (10), the hot spot area having a concentration of subscriber terminals, in which method the base stations (20) form location areas and transmit location code on the basis of which the subscriber terminals (10) are signalling with the base station (20) and identify the base stations (20) belonging to the same location area, **characterized in that**
a location code not belonging to the location area is transmitted by the transceiver (30) to the subscriber terminals (10),
subscriber terminals (10) start signalling with the transceiver (30) when receiving the location code,
the number of signalling subscriber terminals (10) is calculated on the basis of said location code and
a direct distance that the location code has travelled to the subscriber terminal (10) is calculated by the transceiver (30) using signalling.

2. A method as claimed in claim 1, **characterized in that** the number of the subscriber terminals (10) signalling on the basis of the location code not belonging to a local area, is calculated in this method.

3. A method as claimed in claim 1, **characterized in that** the subscriber terminals (10) update information about the base stations located in the local area using location code.

4. A method as claimed in claim 1, **characterized in that** location code not belonging to the local area is transmitted from different locations for calculating a distribution of the subscriber terminals (10).

5. A method as claimed in claim 1, **characterized in that** the radio network comprises a transceiver (30) transmitting location code not belonging to the local area.

6. A method as claimed in claim 5, **characterized in that** a distance of subscriber terminals (10) signalling with the transceiver (30) transmitting location code not belonging to the local area from said transceiver (30) is calculated from signalling.

7. A method as claimed in claim 1, **characterized in that** the number of subscriber terminals on standby is calculated in this method.

8. A method as claimed in claim 1, **characterized in that** the transceiver (30) used in this method is in practice the base station (20).

9. A method as claimed in claim 1, **characterized in that** the subscriber terminal (10) location is calculated on the basis of the substantially direct distance that the location code has travelled to the subscriber terminal (10).

10. A method as claimed in claim 1, **characterized in that** LAC code is used as the location code.

11. A transceiver (30) used in a radio network for determining hot spot area location, the radio network comprising at least one base station (20) and a plurality of subscriber terminals (10), the hot spot area having a concentration of subscriber terminals, and the base stations (20) forming local areas and transmitting location code on the basis of which the subscriber terminals (10) identify the base stations (20) belonging to the local area and are signalling with the base station (20), **characterized in that** the transceiver (30) comprises
transmission means (32) for transmitting location code not belonging to the local area to the subscriber terminals,
the transmission means (32) for signalling with the subscriber terminals, which transmission means are adapted to start signalling with the subscriber terminals when the subscriber terminals receive said location code;
calculation means (33) for calculating the number of signalling subscriber terminals (10) based on the transmitted location code and
the calculation means (33) for calculating a distance between the transceiver (30) and the subscriber terminals (10) signalling with the transceiver (30)) using the signalling.

12. A transceiver (30) as claimed in claim 11, **characterized in that** the calculation means (33) are adapted to calculate the number of those subscriber terminals (10) signalling on the basis of the location code not belonging to the local area.

13. A transceiver (30) as claimed in claim 11, **characterized in that** the calculation means (33) are adapted to determine from signalling a timing advance value on the basis of which a distance between the transceiver (30) and the subscriber terminals (10) is calculated.

14. A transceiver (30) as claimed in claim 11, **characterized in that** the calculation means (33) are adapted to calculate the number of subscriber terminals (10) on standby.

15. A transceiver (30) as claimed in claim 11, **characterized in that** the transmission means (32) are adapted to transmit location code not belonging to the local area from different locations for calculating the distribution of the subscriber terminals (10).

16. A transceiver (30) as claimed in claim 11, **characterized in that** the transceiver (30) is in practice the base station (20).

17. A transceiver (30) as claimed in claim 11,**characterized in that** the transmission means (32) are adapted to transmit LAC code as the location code.

## Patentansprüche

1. Verfahren zum Bestimmen eines Orts eines Hotspotbereichs eines Funknetzwerks,
wobei das Funknetzwerk mindestens eine Basisstation (20) und mehrere Teilnehmerendgeräte (10) aufweist,
wobei der Hotspotbereich eine Ansammlung von Teilnehmerendgeräten aufweist,
wobei in dem Verfahren die Basisstationen (20) Ortsbereiche bilden und Ortskode senden, auf dessen Basis die Teilnehmerendgeräte (10) mit der Basisstation (20) signalisieren und die Basisstationen (20) identifizieren, die zu dem gleichen Ortsbereich gehören,
**dadurch gekennzeichnet, dass**
ein Ortskode, der nicht zu dem Ortsbereich gehört durch den Sendempfänger (30) an die Teilnehmerendgeräte (10) gesendet wird,
Teilnehmerendgeräte (10) bei Empfang des Ortskodes mit dem Sendeempfänger (30) zu signalisieren beginnen,
die Zahl der signalisierenden Teilnehmerendgeräte (10) auf der Basis des Ortskodes berechnet wird, und
eine direkte Entfernung, die der Ortskode zu dem Teilnehmerendgerät (10) zurückgelegt hat, durch den Sendeempfänger (30) unter Verwendung von Signalisieren berechnet wird.

2. Verfahren gemäß Anspruch 1, **dadurch gekennzeichnet, dass** in diesem Verfahren die Zahl der signalisierenden Teilnehmerendgeräte (10) auf der Basis des Ortskodes berechnet wird, der nicht zu einem Ortsbereich gehört.

3. Verfahren gemäß Anspruch 1, **dadurch gekennzeichnet, dass** die Teilnehmerendgeräte (10) Informationen über die, in dem Ortsbereich liegenden Basisstationen unter Verwendung von Ortskode aktualisieren.

4. Verfahren gemäß Anspruch 1, **dadurch gekennzeichnet, dass** Ortskode, der nicht zu dem Ortsbereich gehört von verschiedenen Orten gesendet wird, um eine Verteilung der Teilnehmerendgeräte (10) zu berechnen.

5. Verfahren gemäß Anspruch 1, **dadurch gekennzeichnet, dass** das Funknetzwerk einen Sendeempfänger (30) umfasst, der Ortskode sendet, der nicht zu dem Ortsbereich gehört.

6. Verfahren gemäß Anspruch 5, **dadurch gekennzeichnet, dass** eine Entfernung von Teilnehmerendgeräten (10), die mit dem Sendeempfänger (30) signalisieren und Ortskode senden, der nicht zu dem Ortsbereich gehört, von dem Sendeempfänger (30) aus dem Signalisieren berechnet wird.

7. Verfahren gemäß Anspruch 1, **dadurch gekennzeichnet, dass** in diesem Verfahren die Zahl von Teilnehmerendgeräten in Bereitschaft berechnet wird.

8. Verfahren gemäß Anspruch 1, **dadurch gekennzeichnet, dass** der in diesem Verfahren verwendete Sendeempfänger (30) in Praxis die Basisstation (20) ist.

9. Verfahren gemäß Anspruch 1, **dadurch gekennzeichnet, dass** der Ort eines Teilnehmerendgeräts (10) auf der Basis der im Wesentlichen direkten Entfernung berechnet wird, die der Ortskode zu dem Teilnehmerendgerät (10) zurückgelegt hat.

10. Verfahren gemäß Anspruch 1, **dadurch gekennzeichnet, dass** LAC-Kode als der Ortskode verwendet wird.

11. Sendeempfänger (30), der in einem Funknetzwerk zum Bestimmen des Orts eines Hotspotbereichs verwendet wird,
wobei das Funknetzwerk mindestens eine Basisstation (20) und mehrere Teilnehmerendgeräte (10) aufweist,
wobei der Hotspotbereich eine Ansammlung von Teilnehmerendgeräten aufweist und
wobei die Basisstationen (20) Ortsbereiche bilden und Ortskode senden, auf dessen Basis die Teilnehmerendgeräte (10) die Basisstationen (20) identifizieren, die zu dem Ortsbereich gehören und mit der Basisstation (20) signalisieren,
**dadurch gekennzeichnet, dass** der Sendeempfänger (30) aufweist:
Sendemittel (32), um Ortskode, der nicht zu dem Ortsbereich gehört zu den Teilnehmerendgeräten zu senden,
Sendemittel (32), um mit den Teilnehmerendgeräten zu signalisieren, wobei die Sendemittel angepasst sind, mit den Teilnehmerendgeräten zu signalisieren zu beginnen, wenn die Teilnehmerendgeräte den Ortskode empfangen,
Berechnungsmittel (33), um die Zahl von signalisierenden Teilnehmerendgeräten (10) auf der Basis des gesendeten Ortskodes zu berechnen und
Berechnungsmittel (33) umfasst, um eine Entfernung zwischen dem Sendeempfänger (30) und den Teilnehmerendgeräten (10), die mit dem Sendeempfänger (30) signalisieren, unter der Verwendung des Signalisierens zu berechnen.

12. Sendeempfänger (30) gemäß Anspruch 11, **dadurch gekennzeichnet, dass** die Berechnungsmittel (33) angepasst sind, die Zahl der Teilnehmerendgeräte (10) zu berechnen, die auf der Basis des Ortskodes signalisieren, der nicht zu dem Ortsbereich gehört.

13. Sendeempfänger (30) gemäß Anspruch 11, **dadurch gekennzeichnet, dass** die Berechnungsmittel (33) angepasst sind, aus dem Signalisieren einen Zeitfortschritts-Wert (timing advance value) zu bestimmen, auf dessen Basis eine Entfernung zwischen dem Sendeempfänger (30) und den Teilnehmerendgeräten (10) berechnet wird.

14. Sendeempfänger (30) gemäß Anspruch 11, **dadurch gekennzeichnet, dass** die Berechnungsmittel (33) angepasst sind, die Zahl der Teilnehmerendgeräte (10) in Bereitschaft zu berechnen.

15. Sendeempfänger (30) gemäß Anspruch 11, **dadurch gekennzeichnet, dass** die Sendemittel (32) angepasst sind, Ortscode von verschiedenen Orten zu senden, der nicht zu dem Ortsbereich gehört, um die Verteilung der Teilnehmerendgeräte (10) zu berechnen.

16. Sendeempfänger (30) gemäß Anspruch 11, **dadurch gekennzeichnet, dass** der Sendeempfänger (30) in Praxis die Basisstation (20) ist.

17. Sendeempfänger (30) gemäß Anspruch 11, **dadurch gekennzeichnet, dass** die Sendemittel (32) angepasst sind, LAC-Kode als den Ortscode zu senden.

## Revendications

1. Procédé pour déterminer un emplacement de zone de point sensible de réseau radio, le réseau radio comprenant au moins une station de base (20) et une pluralité de terminaux d'abonnés (10), la zone de point sensible ayant une concentration de terminaux d'abonnés, procédé dans lequel les stations de base (20) forment des zones d'emplacement et émettent un code d'emplacement sur la base duquel les terminaux d'abonnés (10) échangent une signalisation avec la station de base (20) et identifient les stations de base (20) appartenant à la même zone d'emplacement, **caractérisé en ce que**
un code d'emplacement n'appartenant pas à la zone d'emplacement est émis par l'émetteur-récepteur (30) vers les terminaux d'abonnés (10),
des terminaux d'abonnés (10) débutent une signalisation avec l'émetteur-récepteur (30) lorsqu'ils reçoivent le code d'emplacement,
le nombre de terminaux d'abonnés (10) échangeant une signalisation est calculé sur la base dudit code d'emplacement, et
une distance directe parcourue par le code d'emplacement jusqu'au terminal d'abonné (10) est calculée par l'émetteur-récepteur (30) en utilisant une signalisation.

2. Procédé selon la revendication 1, **caractérisé en ce que** le nombre des terminaux d'abonnés (10) échangeant une signalisation sur la base du code d'emplacement n'appartenant pas à une zone locale est calculé dans ce procédé.

3. Procédé selon la revendication 1, **caractérisé en ce que** les terminaux d'abonnés (10) mettent à jour des informations concernant les stations de base situées dans la zone locale en utilisant un code d'emplacement.

4. Procédé selon la revendication 1, **caractérisé en ce qu'**un code d'emplacement n'appartenant pas à la zone locale est émis à partir de différents emplacements pour calculer une répartition des terminaux d'abonnés (10).

5. Procédé selon la revendication 1, **caractérisé en ce que** le réseau radio comprend un émetteur-récepteur (30) émettant un code d'emplacement n'appartenant pas à la zone locale.

6. Procédé selon la revendication 5, **caractérisé en ce qu'**une distance de terminaux d'abonnés (10) échangeant une signalisation avec l'émetteur-récepteur (30) émettant un code d'emplacement n'appartenant pas à la zone locale par rapport audit émetteur-récepteur (30) est calculée à partir d'une signalisation.

7. Procédé selon la revendication 1, **caractérisé en ce que** le nombre de terminaux d'abonnés en attente est calculé dans ce procédé.

8. Procédé selon la revendication 1, **caractérisé en ce que** l'émetteur-récepteur (30) utilisé dans ce procédé est en pratique la station de base (20).

9. Procédé selon la revendication 1, **caractérisé en ce que** l'emplacement du terminal d'abonné (10) est calculé sur la base de la distance sensiblement directe parcourue par le code d'emplacement jusqu'au terminal d'abonné (10).

10. Procédé selon la revendication 1, **caractérisé en ce qu'**un code LAC est utilisé en tant que code d'emplacement.

11. Emetteur-récepteur (30) utilisé dans un réseau radio pour déterminer un emplacement de zone de point sensible, le réseau radio comprenant au moins une station de base (20) et une pluralité de terminaux d'abonnés (10), la zone de point sensible ayant une concentration de terminaux d'abonnés, et les stations de base (20) formant des zones d'emplacement et émettant un code d'emplacement sur la base duquel les terminaux d'abonnés (10) identifient les stations de base (20) appartenant à la zone d'emplacement et échangent une signalisation avec la station de base (20), **caractérisé en ce que** l'émetteur-récepteur (30) comprend :
des moyens d'émission (32) pour émettre un code d'emplacement n'appartenant pas à la zone locale vers les terminaux d'abonnés,
les moyens d'émission (32) pour échanger une signalisation avec les terminaux d'abonnés, lesquels moyens d'émission sont adaptés pour débuter une signalisation avec les terminaux d'abonnés lorsque les terminaux d'abonnés reçoivent ledit code d'emplacement,
des moyens de calcul (33) pour calculer le nombre de terminaux d'abonnés (10) échangeant une signalisation sur la base du code d'emplacement émis, et
les moyens de calcul (33) pour calculer une distance entre l'émetteur-récepteur (30) et les terminaux d'abonnés (10) échangeant une signalisation avec l'émetteur-récepteur (30) en utilisant la signalisation.

12. Emetteur-récepteur (30) selon la revendication 11, **caractérisé en ce que** les moyens de calcul (33) sont adaptés pour calculer le nombre des terminaux d'abonnés (10) échangeant une signalisation sur la base du code d'emplacement n'appartenant pas à la zone locale.

13. Emetteur-récepteur (30) selon la revendication 11, **caractérisé en ce que** les moyens de calcul (33) sont adaptés pour déterminer à partir d'une signalisation une valeur d'avance de synchronisation sur la base de laquelle une distance entre l'émetteur-récepteur (30) et les terminaux d'abonnés (10) est calculée.

14. Emetteur-récepteur (30) selon la revendication 11, **caractérisé en ce que** les moyens de calcul (33) sont adaptés pour calculer le nombre de terminaux d'abonnés (10) en attente.

15. Emetteur-récepteur (30) selon la revendication 11, **caractérisé en ce que** les moyens d'émission (32) sont adaptés pour émettre un code d'emplacement n'appartenant pas à la zone locale à partir de différents emplacements pour calculer la répartition des terminaux d'abonnés (10).

16. Emetteur-récepteur (30) selon la revendication 11, **caractérisé en ce que** l'émetteur-récepteur (30) est, en pratique, la station de base (20).

17. Emetteur-récepteur (30) selon la revendication 11, **caractérisé en ce que** les moyens d'émission (32) sont adaptés pour émettre un code LAC en tant que code d'emplacement.
